# EUROPÄISCHE PATENTSCHRIFT

(11) **EP 0 837 589 B1**
(45) Veröffentlichungstag und Bekanntmachung des Hinweises auf die Patenterteilung: **14.12.2011**
(21) Anmeldenummer: 97117924.7
(22) Anmeldetag: 16.10.1997
(51) Int. Cl.: H04M 11/00, H04M 1/72, H04L 12/28

(54) **Telefonanlage für schnurlose Telefonie**
Cordless telephone arrangement
Installation téléphonique pour des téléphones sans fil

(30) Priorität: 21.10.1996 DE 19643293
(43) Veröffentlichungstag der Anmeldung: 22.04.1998
(73) Patentinhaber: IPCom GmbH & Co. KG, 82049 Pullach (DE)
(72) Erfinder: Mosimann, Dieter, 38274 Gustedt (DE); Roehlk, Hermann, 71665 Vaihingen (DE); Klingenberg, Wolfgang, 31246 Lahstedt (DE); Sandhaus, Georg, 38304 Wolfenbuettel (DE)
(74) Vertreter: Gigerich, Jan

(56) Entgegenhaltungen:
- WO-A-95/35618
- WO-A-97/49225
- GB-A- 2 229 022
- US-A- 5 327 483

## Beschreibung

### Stand der Technik

Die Erfindung geht nicht von einer Telefonanlage für schnurlose Telefonie nach der Gattung des Hauptanspruchs aus.

Aus der nicht vor veröffästlichten deutschen Patentanmeldung DE 1 96 13 519 A1 ist bereits eine Telefonanlage für schnurlose Telefonie bekannt. Die Telefonanlage umfasst mindestens eine Zentrale und mindestens einen davon abgesetzten, insbesondere als schnurlosen Telefonhandapparat ausgebildeten Sendeempfänger. Der Datenübertragung innerhalb der Telefonanlage liegt der DECT-Standard zugrunde.

. Die GB 2 229 022 A offenbart eine Fernsteuerung für elektrische Geräte über eine akustische Kopplung eines Handapparates mit einer Datenstation.

Aus der US-A-5 327 483 ist Schnurlostelefonsystem mit einem Schnurlostelefon bestehend aus einer Basisstation und einer Teilnehmereinheit bekannt. Die Basisstation ist über eine Kommunikationsschnittstelle mit einem Hausbus verbunden, an dem eine Klimaanlage und eine Fensterabschattung angeschlossen sind, welche sich fern bedienen lassen. Steuerungsdaten von der Teilnehmereinheit können über die Kommunikationsschnittstelle und den Hausbus an die Klimaanlage und die Fensterabschattung zur Steuerung derselben übertragen werden.

Die WO-A-95 35618 beschreibt eine Fernsteuerungsanordnung für elektrische Geräte, mit einer Funksende-/Funkempfangseinrichtung und einer dem elektrischen Gerät zugeordneten Fernsteuerungseinrichtung, mit einer Fernsteuerungsschnittstelle, die der Funksende-/Funkempfangseinrichtung zur Fernsteuerung des elektrischen Gerätes der Fernsteuerungseinrichtung zugeordnet ist, mit Steuerungsmitteln, die der Funksende-/Funkempfangseinrichtung zugeordnet sind und durch die Steuerungsmittel initialisierten Fernsteuerungsnachrichten, die die Fernsteuerungsschnittstelle logisch öffnen und schließen, so dass die Fernsteuerungsschnittstelle im geöffneten Zustand in der Fernsteuerungsnachricht enthaltene Fernsteuerungsbefehle an die Fernsteuerungseinrichtung ausgibt. Darüber hinaus ist vorgesehen, dass die Fernsteuerungsschnittstelle und die Fernsteuerungseinrichtung auf eine Fernsteuerungsmeldung eine Rückmeldung übertragen können. EP 0360724 betrifft ein Verfahren zu Überunsache von Telefon-Znstandäzderungen. US-A5 381 462 betrifft in Verbrauchsmessungs- Lese-und Übertragungssystem.

Verteile der Erfindung

Die erfindungsgemäße Telefonanlage mit den Merkmalen des Hauptanspruchs hat demgegenüber den Vorteil, dass durch die Verbindung der ersten Zentrale mit einem an ein Bussystem zur Ansteuerung elektrischer Geräte angeschlossenen Buskoppler die Funktionalität der Telefonanlage wesentlich erhöht wird, da über die Telefonanlage auch die an das Bussystem angeschlossenen elektrischen Geräte gesteuert werden können.

Ein weiterer Vorteil besteht darin, daß zur Steuerung der elektrischen Geräte keine zusätzlichen Bedienteile erforderlich sind, sondern lediglich die für den Telefonbetrieb vorgesehenen Sendeempfänger. Durch diese Weise wird die Übersichtlichkeit und der Bedienkomfort für den Benutzer erhöht und gleichzeitig Material und Kosten eingespart. Auch die Funktionalität der Sendeempfänger wird auf diese Weise vorteilhaft erhöht.

Durch die in den Unteransprüchen aufgeführten Maßnahmen sind vorteilhafte Weiterbildungen und Verbesserungen der im Hauptanspruch angegebenen Telefonanlage möglich.

Vorteilhaft ist die Weiterleitung von vom weiteren elektrischen Geräten empfangenen Zustandsinformationen an die erste Zentrale, die Aussendung dieser Zustandsinformationen von der ersten Zentrale und die Anzeige der Zustandsinformationen am Sendeempfänger. Auf diese Weise wird die Funktionalität der Telefonanlage weiter erhöht, da auch der Zustand des weiteren elektrischen Gerätes abgefragt werden kann.

Besonders vorteilhaft ist der Anschluß der ersten Zentrale über eine Nebenstellenanlage an ein Fernsprechnetz und die Ansteuerung des weiteren elektrischen Gerätes sowie die Zustandsabfrage über die Nebenstellenanlage und das Fernsprechnetz. Auf diese Weise wird die Reichweite für die Bedienung des weiteren elektrischen Gerätes und für die Zustandsabfrage auf einfache Weise erheblich vergrößert.

Vorteilhaft ist außerdem, daß der Sendeempfänger eine Vorrichtung zur akustischen Wiedergabe von über die Tastatur eingegebenen Steuerbefehlen und/oder eine Vorrichtung zum akustischen Empfang von Zustandsinformationen aufweist. Auf diese Weise wird die Funktionalität des Sendeempfängers weiter erhöht, da er auch als Bedienteil für das weitere elektrische Gerät in Verbindung mit einem eine entsprechende akustische Schnittstelle aufweisenden beliebigen Fernsprechendgerät des Fernsprechnetzes einsetzbar ist. Dadurch wird auch für den Benutzer die Übersichtlichkeit erhöht und der Bedienkomfort verbessert, da er unabhängig vom Bedienort nur einen Sendeempfänger zur Bedienung des weiteren elektrischen Gerätes benötigt. Dadurch werden außerdem Material und Kosten eingespart.

Vorteilhaft ist außerdem, daß der Buskoppler in die erste Zentrale integriert ist. Auf diese Weise wird die Funktionalität der ersten Zentrale erhöht, da sie nun auch an ein Bussystem anschließbar ist. Außerdem werden durch die bauliche Vereinigung des Buskopplers und der ersten Zentrale Platz, Material und Kosten eingespart.

### Zeichnung

Ausführungsbeispiele der Erfindung sind in der Zeichnung dargestellt und in der nachfolgenden Beschreibung näher erläutert. Es zeigen Figur 1 eine an ein Bussystem angeschlossene Telefonanlage mit einer ersten Zentrale, Figur 2 eine an ein Bussystem angeschlossene Telefonanlage mit einer ersten und einer zweiten Zentrale und Figur 3 das Blockschaltbild eines Sendeempfängers.

### Beschreibung des Ausführungsbeispiels

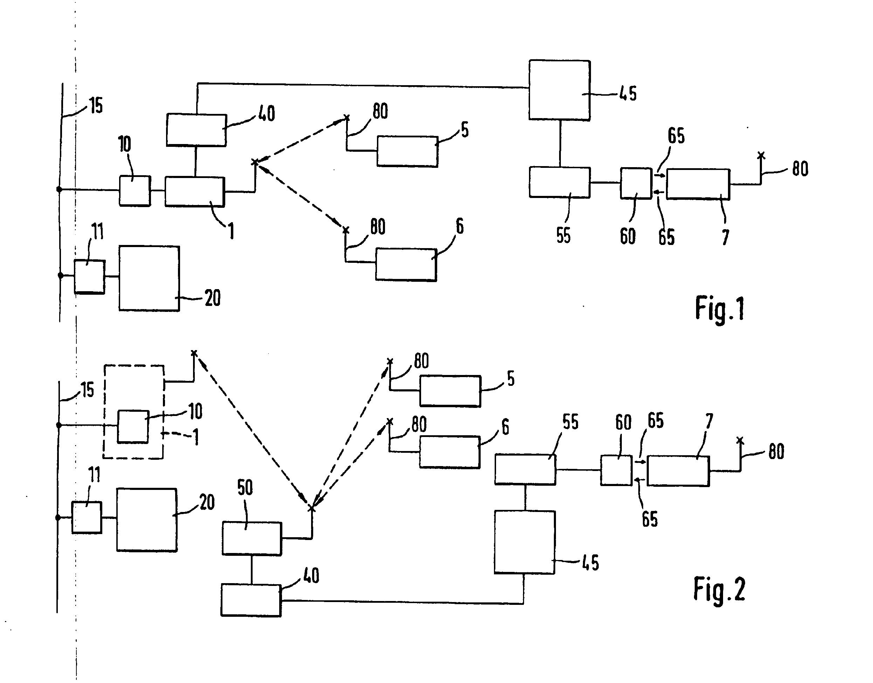

In Figur 1 kennzeichnet 15 ein als Hausbus ausgebildetes Bussystem nach dem EIB-Standard. Als Standard für die Datenkommunikation über das Bussystem 15 kann jedoch auch der LON-, der EHS-, oder ein vergleichbarer Standard gewählt werden. An das Bussystem 15 ist über einen ersten Buskoppler 10 eine Telefonanlage für schnurlose Telefonie nach dem DECT-Standard angeschlossen. Der Datenübertragung innerhalb der Telefonanlage kann jedoch auch der CT2- oder ein vergleichbarer Standard zugrundegelegt werden. An das Bussystem 15 ist über einen zweiten Buskoppler 11 ein weiteres elektrisches Gerät 20 angeschlossen. Dabei kann es sich um einen Beleuchtungskörper, einen elektrischen Antrieb für Jalousien, eine Heizung, eine Alarmanlage, eine Waschmaschine, eine Stereoanlage oder dergleichen handeln. An das Bussystem 15 können auch noch mehrere elektrische Geräte angeschlossen werden. Beim Anschluß mehrerer elektrischer Geräte an das Bussystem 15 erfolgt eine fehlerfreie Ansteuerung durch entsprechend unterschiedliche Adressen, so daß die einzelnen elektrischen Geräte eindeutig adressierbar sind. Die Telefonanlage für schnurlose Telefonie weist eine mit dem ersten Buskoppler 10 verbundene erste Zentrale 1, einen ersten von der ersten Zentrale 1 abgesetzten und als schnurloser Telefonhandapparat ausgebildeten Sendeempfänger 5 und einen zweiten, ebenfalls von der ersten Zentrale 1 abgesetzten, als Bedienteil für das weitere elektrische Gerät 20 ausgebildeten Sendeempfänger 6 auf. Der Datenaustausch zwischen der ersten Zentrale 1 und dem ersten Sendeempfänger 5 bzw. der ersten Zentrale 1 und dem zweiten Sendeempfänger 6 erfolgt über Funk nach dem DECT-Standard und ist in Figur 1 durch gestrichelte Doppelpfeile dargestellt. Die erste Zentrale 1 ist ferner über eine Nebenstellenanlage 40 mit einem Fernsprechnetz 45 verbunden. An das Fernsprechnetz 45 ist auch ein externes Fernsprechendgerät 55 angeschlossen, das mit einem als Telefonhörer ausgebildeten Hör- und Sprechteil 60 verbunden ist. Über eine akustische Schnittstelle 65 ist der Hör- und Sprechteil 60 mit einem dritten von der ersten Zentrale 1 abgesetzten, als schnurloser Telefonhandapparat oder als Bedienteil für das weitere elektrische Gerät 20 ausgebildeter Sendeempfänger 7 angeschlossen.

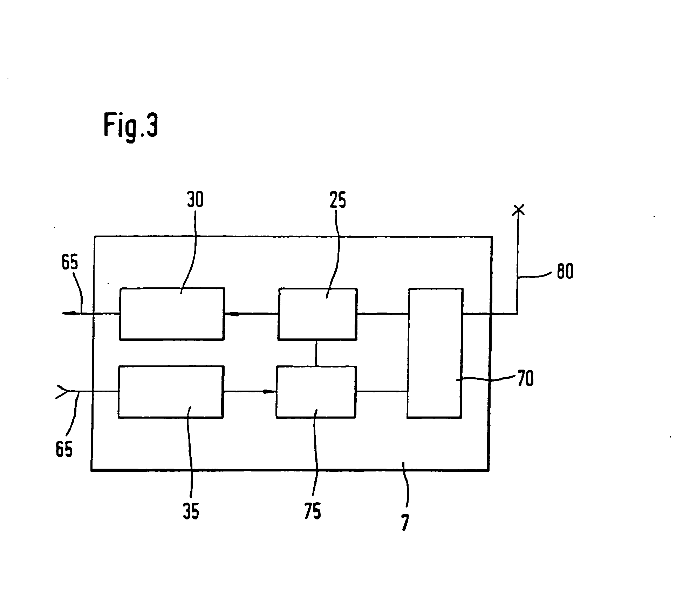

In Figur 3 ist der dritte Sendeempfänger 7 mit der akustischen Schnittstelle 65 als Blockschaltbild dargestellt. Der dritte Sendeempfänger 7 weist ein Sende-/Empfangsteil 70 auf, an das eine Sende-/Empfangsantenne 80 angeschlossen ist. Mit dem Sende-/Empfangsteil 70 sind eine Tastatur 25 und eine Anzeige 75 verbunden. Die Tastatur 25 und die Anzeige 75 sind auch untereinander verbunden. An die Tastatur 25 ist eine Vorrichtung 30 zur akustischen Wiedergabe und an die Anzeige 75 ist eine Vorrichtung 35 zum akustischen Empfang angeschlossen. Der Ausgang der Vorrichtung 30 zur akustischen Wiedergabe und der Eingang der Vorrichtung 35 zum akustischen Empfang bilden die akustische Schnittstelle 65.

Nach dem in Figur 3 dargestellten Prinzip sind auch der erste und der zweite Sendeempfänger 5 und 6 aufgebaut, wobei bei diesen beiden Sendeempfängern 5 und 6 die Vorrichtung 30 zur akustischen Wiedergabe, die Vorrichtung 35 zum akustischen Empfang und die akustische Schnittstelle 65 nur dann erforderlich sind, wenn sie in der für den dritten Sendeempfänger 7 beschriebenen Weise verwendet werden sollen.

Der erste und der zweite Sendeempfänger 5 und 6 befinden sich in einer von der ersten Zentrale 1 aufgespannten Funkzelle. Mit dem als schnurloser Telefonhandapparat - ausgebildeten ersten Sendeempfänger 5 kann über die erste Zentrale 1 und die Nebenstellenanlage 40 eine Verbindung zu einem beliebigen Teilnehmer des Fernsprechnetzes 45 aufgebaut werden. Außerdem kann mit in der Figur 1 nicht dargestellten weiteren als schnurloser Telefonhandapparat ausgebildeten Sendeempfängern in der Funkzelle der ersten Zentrale 1 über die erste Zentrale 1 bzw. mit anderen ebenfalls nicht dargestellten an die Nebenstellenanlage 40 ggf. schnurlos über eine weitere Zentrale angeschlossenen Teilnehmern kommuniziert werden. Dieser Fernsprechverkehr wird in an sich bekannter Weise mit Hilfe der Tastatur 25 und der Anzeige 75 durchgeführt. Durch entsprechende Eingaben an der Tastatur 25 an einem der drei Sendeempfänger 5, 6 und 7 werden im Sende-/Empfangsteil 70 Steuerbefehle generiert und von der Sende-/Empfangsantenne 80 ausgesendet. Befindet sich der entsprechende Sendeempfänger 5, 6, 7 dabei in der Funkzelle der ersten Zentrale 1, so werden die ausgesendeten Steuerbefehle in der ersten Zentrale 1 empfangen. Aus den empfangenen Signalen werden in der ersten Zentrale 1 Steuersignale abgeleitet und an den ersten Buskoppler 10 weitergeleitet. Im ersten Buskoppler 10 werden die Steuersignale in entsprechende für das EIBstandardisierte Bussystem 15 geeignete Steuersignale umgewandelt. Bei der Eingabe der Steuerbefehle an der Tastatur 25 des Sendeempfängers 5, 6, 7 muß auch als Adressat das weitere elektrische Gerät 20 eingegeben werden. Die Adresse des weiteren elektrischen Gerätes 20 kann somit in die jeweiligen Steuersignale mitaufgenommen werden, so daß das weitere elektrische Gerät 20 eindeutig adressierbar und durch den Sendeempfänger 5, 6, 7 ansteuerbar ist. Die Steuersignale werden dann vom zweiten Buskoppler 11 in entsprechende Steuerbefehle für das weitere elektrische Gerät 20 beispielsweise zum Einschalten der Beleuchtung, zum Hochziehen der Jalousien, oder dergleichen je nach Art des weiteren elektrischen Gerätes 20 umgewandelt. Bei der Bildung der Steuerbefehle durch Tastenkombinationen an der Tastatur 25 des Sendeempfängers 5, 6, 7 kann den Steuerbefehlen auch die Adresse des aussendenden Sendeempfängers 5, 6, 7 mitgegeben werden und in die entsprechenden Steuersignale integriert werden. Somit besteht die Möglichkeit, daß das weitere elektrische Gerät 20 nach erfolgter Ansteuerung durch den Sendeempfänger 5, 6, 7 ein Quittierungssignal erzeugt, das den Empfang der Steuersignale bestätigt und den aktuellen Zustand des weiteren elektrischen Gerätes 20 nach erfolgter Ansteuerung enthält. Dem Quittierungssignal wird dann auch die Adresse des entprechenden, die Ansteuerung des elektrischen Gerätes 20 auslösenden Sendeempfängers 5, 6, 7 beigefügt. Im zweiten Buskoppler 11 wird das Quittierungssignal in ein entsprechendes Quittierungssignal nach dem EIB-Standard umgewandelt und an das Bussystem 15 abgegeben. Aufgrund der Adressierung wird das Quittierungssignal vom Bussystem 15 an den ersten Buskoppler 10 weitergeleitet. Vom ersten Buskoppler 10 wird dann ein entsprechend angepaßtes Quittierungssignal an die erste Zentrale 1 abgegeben, die eine Umwandlung in ein DECT-Quittierungssignal und eine Abstrahlung dieses Signals veranlaßt. Aufgrund der im Quittierungssignal enthaltenen Adressierung wird das Signal am entsprechenden Sendeempfänger 5, 6, 7 über die Sende /Empfangsantenne 80 im Sende-/Empfangsteil 70 empfangen und die Quittierungs- und Zustandsinformationen an der Anzeige 75 dargestellt. Auf diese Weise ist eine Kontrolle des weiteren elektrischen Gerätes 20 über den entsprechenden Sendeempfänger 5, 6, 7 möglich.

Es ist auch möglich, an einem der Sendeempfänger 5, 6, 7 durch Tastenkombinationen an der Tastatur 25 Steuerbefehle zu bilden, die lediglich eine Zustandsabfrage des weiteren elektrischen Gerätes 20 bewirken. Außerdem ist es möglich, daß das weitere elektrische Gerät 20 bei jeder Zustandsänderung, sei sie durch einen der Sendeempfänger 5, 6, 7 bewirkt oder nicht und/oder zu vorgegebenen Zeiten Zustandsinformationen über den zweiten Buskoppler 11 an das Bussystem 15 zur Weiterleitung an einen Sendeempfänger 5, 6, 7 abgibt. Dazu muß jedoch die Adresse des entsprechenden Sendeempfängers 5, 6, 7 im weiteren elektrischen Gerät 20 bekannt sein und dem entsprechenden Zustandsinformationssignal beigefügt werden.

Durch die Verbindung der ersten Zentrale 1 über die Nebenstellenanlage 40 mit dem Fernsprechnetz 45 ist es außerdem möglich, daß die erste Zentrale 1 Steuerbefehle von einem beliebigen mit dem Fernsprechnetz 45 verbundenen Teilnehmer empfängt. Auch in diesem Fall gibt die erste Zentrale 1 von den empfangenen Steuerbefehlen abgeleitete Signale an den ersten Buskoppler 10 zur Ansteuerung des weiteren elektrischen Gerätes 20 ab, wobei die Umwandlung der Steuersignale und deren Weiterleitung an das weitere elektrische Gerät 20 in der bereits beschriebenen Weise erfolgt. Sofern den Steuerbefehlen auch die Adresse des absendenden Teilnehmers des Fernsprechnetzes 45 beigefügt ist, können auch Quittierungssignale und Zustandsinformationen vom weiteren elektrischen Gerät 20 in der bereits beschriebenen Weise an die erste Zentrale 1 übertragen werden, von wo sie nach entsprechender Umwandlung in den Übertragungsstandard des Fernsprechnetzes 45 über die Nebenstellenanlage 40 an das Fernsprechnetz 45 bzw. den entsprechenden Teilnehmer abgegeben werden können. Ist die Adresse dieses Teilnehmers im weiteren elektrischen Gerät 20 bekannt, können auch unabhängig von von diesem Teilnehmer ausgesendeten Aufforderungssignalen Zustandsinformationen vom weiteren elektrischen Gerät 20 an diesen Teilnehmer übertragen werden.

Ein solcher Teilnehmer des Fernsprechnetzes 45 ist in Figur 1 durch das externe Fernsprechendgerät 55 gekennzeichnet.

Dabei hat die Eingabe einer Tastenkombination an der Tastatur 25 des dritten Sendeempfängers 7 die Bildung entsprechender Steuerbefehle in der Vorrichtung 30 zur akustischen Wiedergabe zur Folge. Die Steuerbefehle werden also am Ausgang der Vorrichtung 30 an der akustischen Schnittstelle 65 akustisch wiedergegeben, vom Hörteil des Telefonhörers 60 empfangen und an das externe Fernsprechendgerät 55 zur Abgabe an das Fernsprechnetz 45 weitergeleitet. Dabei wird für die akustische Kopplung zwischen dem dritten Sendeempfänger 7 und dem Telefonhörer 60 beispielsweise das Mehrfrequenzverfahren angewendet. Dieses Verfahren kann auch für den Empfang von Quittungssignalen und/oder Zustandsinformationen des weiteren elektrischen Gerätes 20 aus dem Fernsprechnetz 45 verwendet werden, wobei am Eingang der Vorrichtung 35 zum akustischen Empfang entsprechende Töne vom Sprechteil des Telefonhörers 60 über die akustische Schnittstelle 65 empfangen und nach einer geeigneten Datenaufbereitung von der Vorrichtung 35 zum akustischen Empfang zur Darstellung an die Anzeige 75 abgegeben werden.

Ein weiteres Ausführungsbeispiel der erfindungsgemäßen Telefonanlage ist in Figur 2 dargestellt. In Figur 2 ist der erste Buskoppler 10 in die erste Zentrale 1 integriert.

Der Datenaustausch zwischen dem ersten Buskoppler 10 und der ersten Zentrale 1 erfolgt dabei in der bereits beschriebenen Weise. Gemäß Figur 2 ist eine von der ersten Zentrale 1 abgesetzte zweite Zentrale 50 vorgesehen, die über die Nebenstellenanlage 40 an das Fernsprechnetz 45 angeschlossen ist. Die erste Zentrale 1 hingegen ist nicht an die Nebenstellenanlage 40 angeschlossen. Ansonsten entspricht die Anordnung gemäß Figur 2 der Anordnung gemäß Figur 1. Gemäß Figur 2 findet nun der Datenaustausch zwischen dem ersten bzw. dem zweiten Sendeempfänger 5 und 6 und der ersten Zentrale 1 über die zweite Zentrale 50 statt. Dieser Datenaustausch ist in Figur 2 ebenfalls durch gestrichelte Doppelpfeile dargestellt. Der erste und der zweite Sendeempfänger 5 und 6 befinden sich nun in einer von der zweiten Zentrale 50 aufgespannten Funkzelle und nicht mehr notwendigerweise in der von der ersten Zentrale 1 aufgespannten Funkzelle. Auch ist es bei dem in Figur 2 dargestellten Ausführungsbeispiel nicht unbedingt notwendig, daß über die erste Zentrale 1 auch Telefonverkehr abgewickelt wird. Dadurch läßt sich die erste Zentrale 1 mit einer im Vergleich zur zweiten Zentrale 50 erheblich einfacheren Funktionalität ausstatten, die lediglich für den Empfang von Steuerbefehlen zur Ansteuerung des weiteren elektrischen Gerätes 20 und für das Aussenden von Zustandsinformationen des weiteren elektrischen Gerätes 20 ausgelegt sein muß. Für einen reibungslosen Datenaustausch zwischen der ersten Zentrale 1 und der zweiten Zentrale 50 muß die zweite Zentrale 50 in der von der ersten Zentrale 1 aufgespannten Funkzelle und die erste Zentrale 1 in der von der zweiten Zentrale 50 aufgespannten Funkzelle liegen. Die Funkübertragung zwischen der ersten Zentrale 1 und der zweiten Zentrale 50 erfolgt dabei ebenfalls nach dem DECT-Standard. Die zweite Zentrale 50 dient daher als Relaisstation, die Steuerbefehle vom ersten bzw. zweiten Sendeempfänger 5 und 6 an die erste Zentrale 1 weiterleitet und/oder Quittierungssignale und Zustandsinformationen von der ersten Zentrale 1 an den ersten bzw. zweiten Sendeempfänger 5 und 6 weiterleitet. Werden die Steuerbefehle zur Ansteuerung des weiteren elektrischen Gerätes 20 von einem Teilnehmer des Fernsprechneztes 45 in der für das Ausführungsbeispiel gemäß Figur 1 beschriebenen Weise generiert, so findet in der zweiten Zentrale 50 eine Umwandlung dieser Steuerbefehle in Steuersignale nach dem DECT-Standard und eine Abstrahlung dieser Signale an die erste Zentrale 1 statt. Die Weiterverarbeitung der von der ersten Zentrale 1 empfangenen Steuersignale erfolgt auf die bereits beschriebene Weise. Umgekehrt werden in der zweiten Zentrale 50 empfangene Quittierungssignale und/oder Zustandsinformationen nach dem DECT-Standard in der zweiten Zentrale 50 in Informationssignale nach dem Übertragungsstandard für das Fernsprechnetz 45 umgewandelt, so daß sie an entsprechende Teilnehmer des Fernsprechnetzes 45 in bereits beschriebener Weise weitergeleitet werden können.

Auch der schnurlose Telefonverkehr läuft nun nicht mehr über die erste Zentrale 1 sondern über die zweite Zentrale 50 ab.

Die Integration des ersten Buskopplers 10 in die erste Zentrale 1 kann auch beim Ausführungsbeispiel gemäß Figur 1 realisiert werden.

Bei der Ausführung des zweiten Sendeempfängers 6 als Bedienteil für das weitere elektrische Gerät 20 ist keine Telefonfunktionalität erforderlich, so daß der zweite Sendeempfänger 6 im Vergleich zum ersten Sendeempfänger 5 eine einfachere und weniger aufwendige Realisierung darstellt. Ist der entsprechende Sendeempfänger 5, 6, 7 mit der akustischen Schnittstelle 65 ausgerüstet, so kann er vom Benutzer auch außerhalb der Funkzelle der ersten Zentrale 1 bzw. der zweiten Zentrale 50 für die Ansteuerung bzw. die Zustandsabfrage des weiteren elektrischen Gerätes 20 in der bereits beschriebenen Weise in Verbindung mit dem externen Fernsprechendgerät 55 verwendet werden. Durch die Verbindung der Anzeige 75 mit der Tastatur 25 sind an der Anzeige 75 zur Kontrolle auch die eingegebenen Steuerbefehle darstellbar.

Befindet sich beim Ausführungsbeispiel gemäß Figur 2 der erste Sendeempfänger 5 bzw. der zweite Sendeempfänger 6 in der von der ersten Zentrale 1 aufgespannten Funkzelle, so können die Steuerbefehle und/oder die Zustandsinformationen zwischen der ersten Zentrale 1 und dem ersten Sendeempfänger 5 bzw. dem zweiten Sendeempfänger 6 auch direkt, d.h. ohne die zweite Zentrale 50 als Zwischenstation ausgetauscht werden. Die zweite Zentrale 50 dient dann lediglich zur Abwicklung des Telefonverkehrs, vor allem dann, wenn die erste Zentrale 1 keine Telefonfunktionalität aufweist.

## Patentansprüche

1. Telefonanlage für schnurlose Telefonie, insbesondere nach dem DECT-Standard, mit mindestens einer ersten Zentrale (1) und mindestens einem davon abgesetzten, insbesondere als schnurloser Telefonhandapparat ausgebildeten Sendeempfänger (5, 6, 7), wobei ein Buskoppler (10) vorgesehen ist, der an ein Bussystem (15) angeschlossen ist, mit dem mindestens ein weiteres elektrisches Gerät (20) verbunden ist, wobei der Buskoppler (10) mit der ersten Zentrale (1) verbunden ist, wobei von dem Sendeempfänger (5, 6, 7) Steuerbefehle aussendbar sind und wobei die erste Zentrale (1) aus empfangenen Steuerbefehlen abgeleitete Signale an den Buskoppler (10) zur Ansteuerung des weiteren elektrischen Gerätes (20) weiterleitet**dadurch gekennzeichnet, dass** den Steuerbefehlen des aussendenden Sendeempfängers (5, 6, 7) die Adresse des aussendenden Sendeempfängers (5, 6, 7) mitgegeben wird,
so dass die Adresse eines entsprechenden Sendeempfängers (5, 6, 7) dem weiteren elektrischen Gerät bekannt ist,
dass das weitere elektrische Gerät bei jeder Zustandsänderung und zu vorgegebenen Zeiten einem Zustandsinformationssignal die Adresse des entsprechenden Sendeempfängers (5, 6, 7) beifügt und beides über einen zweiten Buskoppler (11) an das Bussystem (15) zur Weiterleitung an den entsprechenden Sendeempfänger (5, 6, 7) abgibt,
und dass Quittierungssignale und Zustandsinformationen vom weiteren elektrischen Gerät (20) an den Sendeempfänger (5, 6, 7) abgegeben werden können.

2. Telefonanlage nach Anspruch 1, **dadurch gekennzeichnet, daß** der Buskoppler (10) vom weiteren elektrischen Gerät (20) empfangene Zustandsinformationen an die erste Zentrale (1) weiterleitet und daß diese Zustandsinformationen von der ersten Zentrale (1) aussendbar sind.

3. Telefonanlage nach Anspruch 2, **dadurch gekennzeichnet, daß** die Zustandsinformationen am Sendeempfänger (5, 6, 7) anzeigbar sind.

4. Telefonanlage nach Anspruch 1, 2 oder 3, **dadurch gekennzeichnet, daß** die Steuerbefehle durch Tastenkombinationen an einer Tastatur (25) des Sendeempfängers (5, 6, 7) bildbar sind.

5. Telefonanlage nach einem der vorherigen Ansprüche, **dadurch gekennzeichnet, daß** der Sendeempfänger (5, 6, 7) eine Vorrichtung (30) zur akustischen Wiedergabe von über die Tastatur (25) eingegebenen Steuerbefehlen und/oder eine Vorrichtung (35) zum akustischen Empfang von Zustandsinformationen aufweist.

6. Telefonanlage nach einem der vorherigen Ansprüche, **dadurch gekennzeichnet, daß** die erste Zentrale (1) über eine Nebenstellenanlage (40) an ein Fernsprechnetz (45) anschließbar ist.

7. Telefonanlage nach Anspruch 6, **dadurch gekennzeichnet, daß** die erste Zentrale (1) aus von dem Fernsprechnetz (45) empfangenen Steuerbefehlen abgeleitete Signale an den Buskoppler (10) zur Ansteuerung des weiteren elektrischen Gerätes (20) und/oder empfangene Zustandsinformationen über die Nebenstellenanlage (40) an das Fernsprechnetz (45) abgibt.

8. Telefonanlage nach einem der vorherigen Ansprüche, **dadurch gekennzeichnet, daß** eine von der ersten Zentrale (1) abgesetzte zweite Zentrale (50) vorgesehen ist und daß die zweite Zentrale (50) aus empfangenen Steuerbefehlen abgeleitete Signale über die erste Zentrale (1) an den Buskoppler (10) zur Ansteuerung des weiteren elektrischen Gerätes (20) überträgt und/oder empfangene Zustandsinformationen aussendet.

9. Telefonanlage nach Anspruch 8, **dadurch gekennzeichnet, daß** die zweite Zentrale (50) über die Nebenstellenanlage (40) an das Fernsprechnetz (45) anschließbar ist und daß die zweite Zentrale (50) aus von dem Fernsprechnetz (45) empfangenen Steuerbefehlen abgeleitete Signale über die erste Zentrale (1) an den Buskoppler (10) zur Ansteuerung des weiteren elektrischen Gerätes (20) überträgt und/oder empfangene Zustandsinformationen über die Nebenstellenanlage (40) an das Fernsprechnetz (45) abgibt.

10. Telefonanlage nach einem der vorherigen Ansprüche, **dadurch gekennzeichnet, daß** der Buskoppler (10) in die erste Zentrale (1) integriert ist.

## Claims

1. Telephone system for cordless telephony, in particular in accordance with the DECT standard, comprising at least one first central station (1) and at least one transceiver (5, 6, 7) remote therefrom, in particular constructed as a cordless telephone set, wherein a bus coupler (10) is provided which is connected to a bus system (15), to which at least one other electrical device (20) is connected, the bus coupler (10) being connected to the first central station (1), wherein control commands can be sent out by the transceiver (5, 6, 7) and wherein the first central station (1) forwards signals derived from received control commands to the bus coupler (10) for driving the further electrical device (20), **characterized in that** the control commands of the sending transceiver (5, 6, 7) are accompanied by the address of the sending transceiver (5, 6, 7), so that the address of a corresponding transceiver (5, 6, 7) is known to the further electrical device, **in that** the further electrical device adds the address of the corresponding transceiver (5, 6, 7) to a status information signal with each status change and at predetermined times and delivers both via a second bus coupler (11) to the bus system (15) for forwarding to the corresponding transceiver (5, 6, 7), and **in that** acknowledgement signals and status information can be delivered to the transceiver (5, 6, 7) from the further electrical device (20).

2. Telephone system according to Claim 1, **characterized in that** the bus coupler (10) forwards status information received from the further electrical device (20) to the first central station (1) and this status information can be sent out by the first central station (1).

3. Telephone system according to Claim 2, **characterized in that** the status information can be displayed on the transceiver (5, 6, 7).

4. Telephone system according to Claim 1, 2 or 3, **characterized in that** the control commands can be formed by key combinations on a keyboard (25) of the transceiver (5, 6, 7).

5. Telephone system according to one of the preceding claims, **characterized in that** the transceiver (5, 6, 7) has a device (30) for the audible reproduction of control commands input via the keyboard (25) and/or a device (35) for the audible reception of status information.

6. Telephone system according to one of the preceding claims, **characterized in that** the first central station (1) can be connected to a telephone network (45) via a private branch exchange (40).

7. Telephone system according to Claim 6, **characterized in that** the first central station (1) delivers signals derived from control commands received from the telephone network (45) to the bus coupler (10) for driving the further electrical device (20) and/or received status information to the telephone network (45) via the private branch exchange (40).

8. Telephone system according to one of the preceding claims, **characterized in that** a second central station (50) remote from the first central station (1) is provided and **in that** the second central station (50) transmits signals derived from received control commands via the first central station (1) to the bus coupler (10) for driving the further electrical device (20) and/or sends out received status information.

9. Telephone system according to Claim 8, **characterized in that** the second central station (50) can be connected to the telephone network (45) via the private branch exchange (40) and **in that** the second central station (50) transmits signals derived from control commands received from the telephone network (45) via the first central station (1) to the bus coupler (10) for driving the further electrical device (20) and/or delivers received status information to the telephone network (45) via the private branch exchange (40).

10. Telephone system according to one of the preceding claims, **characterized in that** the bus coupler (10) is integrated into the first central station (1).

## Revendications

1. Installation téléphonique pour de la téléphonie sans fil, en particulier selon le standard DECT, comprenant au moins un premier central (1) et au moins un émetteur-récepteur (5, 6, 7), décalé par rapport au central et conçu en particulier comme combiné téléphonique sans fil, un coupleur de bus (10) étant prévu, lequel est raccordé à un système de bus (15), avec lequel au moins un autre appareil (20) électrique est relié, le coupleur de bus (10) étant relié au premier central (1), des instructions de commande pouvant être émises par l'émetteur-récepteur (5, 6, 7) et le premier central (1) transmettant des signaux déduits d'instructions de commande reçues au coupleur de bus (10) pour l'activation de l'autre appareil (20) électrique, **caractérisée en ce que** l'adresse de l'émetteur-récepteur (5, 6, 7) émettant est donnée aux instructions de commande de l'émetteur-récepteur (5, 6, 7) émettant, de sorte que l'adresse d'un émetteur-récepteur (5, 6, 7) correspondant arrive dans l'autre appareil électrique,
**en ce que** l'autre appareil électrique ajoute l'adresse de l'émetteur-récepteur (5, 6, 7) correspondant à un signal d'information d'état lors de toute modification d'état et à des moments prédéfinis et envoie les deux éléments via un second coupleur de bus (11) au système de bus (15) pour la transmission à l'émetteur-récepteur (5, 6, 7) correspondant,
et **en ce que** des signaux d'acquittement et des informations d'état peuvent être envoyés par l'autre appareil (20) électrique à l'émetteur-récepteur (5, 6, 7).

2. Installation téléphonique selon la revendication 1, **caractérisée en ce que** le coupleur de bus (10) transmet des informations d'état reçues de l'autre appareil (20) électrique au premier central (1) et **en ce que** ces informations d'état peuvent être envoyées par le premier central (1).

3. Installation téléphonique selon la revendication 2, **caractérisée en ce que** les informations d'état peuvent être affichées sur l'émetteur-récepteur (5, 6, 7).

4. Installation téléphonique selon la revendication 1, 2 ou 3, **caractérisée en ce que** les instructions de commande peuvent être formées par des combinaisons de touches sur un clavier (25) de l'émetteur-récepteur (5, 6, 7).

5. Installation téléphonique selon l'une des revendications précédentes, **caractérisée en ce que** l'émetteur-récepteur (5, 6, 7) présente un dispositif (30) pour la restitution acoustique d'instructions de commande entrées via le clavier (25) et/ou un dispositif (35) pour la réception acoustique d'informations d'état.

6. Installation téléphonique selon l'une quelconque des revendications précédentes, **caractérisée en ce que** le premier central (1) peut être raccordé par un poste secondaire (40) à un réseau téléphonique (45).

7. Installation téléphonique selon la revendication 6, **caractérisé en ce que** le premier central (1) envoie des signaux déduits d'instructions de commande reçues du réseau téléphonique (45) au coupleur de bus (10) pour l'activation de l'autre appareil (20) électrique et/ou des informations d'état reçues via le poste secondaire (40) au réseau téléphonique (45).

8. Installation téléphonique selon l'une des revendications précédentes, **caractérisée en ce qu'**un second central (50) décalé par rapport au premier central (1) est prévu et **en ce que** le second central (50) transmet des signaux déduits d'instructions de commande reçues via le premier central (1) au coupleur de bus (10) pour l'activation de l'autre appareil (20) électrique et/ou émet des informations d'état.

9. Installation téléphonique selon la revendication 8, **caractérisée en ce que** le second central (50) peut être raccordé via le poste secondaire (40) au réseau téléphonique (45) et **en ce que** le second central (50) transmet des signaux déduits d'instructions de commande reçues du réseau téléphonique (45) via le premier central (1) au coupleur de bus (10) pour l'activation de l'autre appareil (20) électrique et/ou envoie des informations d'état reçues via le poste secondaire (40) au réseau téléphonique (45).

10. Installation téléphonique selon l'une quelconque des revendications précédentes, **caractérisée en ce que** le coupleur de bus (10) est intégré dans le premier central (1).
